# EUROPÄISCHE PATENTSCHRIFT

(11) **EP 3 526 557 B1**
(45) Veröffentlichungstag und Bekanntmachung des Hinweises auf die Patenterteilung: **07.06.2023**
(21) Anmeldenummer: 17761189.4
(22) Anmeldetag: 04.09.2017
(51) Int. Cl.: G01G 17/04

(54) **VORRICHTUNG UND VERFAHREN ZUM BESTIMMEN DES GEWICHTS EINES HYDROSPEICHERS**
DEVICE AND METHOD FOR DETERMINING THE WEIGHT OF A HYDRAULIC ACCUMULATOR
DISPOSITIF ET PROCÉDÉ POUR DÉTERMINER LE POIDS D'UN ACCUMULATEUR HYDRAULIQUE

(30) Priorität: 14.10.2016 DE 102016012621
(43) Veröffentlichungstag der Anmeldung: 21.08.2019
(73) Patentinhaber: Hydac Technology GmbH, 66280 Sulzbach (DE)
(72) Erfinder: KLOFT, Peter, 56235 Ransbach-Baumbach (DE); BALTES, Herbert, 66679 Losheim (DE)
(74) Vertreter: Bartels und Partner, Patentanwälte
(86) Internationale Anmeldenummer: PCT/EP2017/001042
(87) Internationale Veröffentlichungsnummer: WO 2018/068877

(56) Entgegenhaltungen:
- US-A- 4 063 605

## Beschreibung

Die Erfindung betrifft eine Vorrichtung zum Bestimmen des Gewichts eines Hydrospeichers, mit den Merkmalen im Oberbegriff von Anspruch 1. Die Erfindung betrifft des Weiteren Verfahren zum Durchführen einer Gewichtsmessung unter Einsatz einer solchen Vorrichtung.

Bei hydropneumatischen Speichern oder Hydrospeichern ist es bisher notwendig gewesen, die Gasvorspannung, die zum bestimmungsgemäßen Betrieb eines derartigen Speichers erforderlich ist, in gewissen zeitlichen Abständen zu kontrollieren, da in der Regel mit Gasverlusten in Abhängigkeit von der Betriebsweise des jeweiligen Hydrospeichers zu rechnen ist. Hierfür kann man die entsprechende Hydraulikanlage auf der sogenannten Flüssigkeits- oder Ölseite vollständig drucklos machen, jedenfalls zumindest den Teil der Anlage, an die der jeweilige Hydrospeicher angeschlossen ist, um dann in diesem drucklosen Zustand den Gasvorspannungsdruck des in dem Hydrospeicher befindlichen Gases, meist in Form von Stickstoffgas, zu überprüfen und gegebenenfalls fehlende Mengen auf der Gasseite des Speichers nachzufüllen. Dieser Vorgang ist jedoch zeitintensiv und die Hydrospeicheranlage ist im Zeitraum der dahingehenden Überprüfung nicht betriebsbereit.

Um diesen Nachteilen zu begegnen, ist in der DE 43 20 383 C2 eine Vorrichtung zum Messen des Ist-Gasvorspannungsdruckes eines in einem hydropneumatischen Speicher aufnehmbaren Gases vorgeschlagen worden, bei der eine gasführende Verbindung zwischen dem Speicher und einer einen Bruchteil des Speichervolumens aufweisenden Messkammer hergestellt ist, die mittels einer Absperreinrichtung absperrbar ist, wobei mittels eines zwischen dem Speicher und der Absperreinrichtung angeordneten Druckwertaufnehmers bei abgesperrter Verbindung der Gasdruck im Speicher sowie nach dem Öffnen der Verbindung die damit einhergehende Druckänderung derart messbar ist, dass aus dem derart erhaltenen Druckwertepaar der Ist-Gasvorspannungsdruck rechnerisch ermittelt werden kann. Dergestalt lässt sich der Ist-Gasvorspannungsdruck mit konstruktiv einfachen Mitteln mit nur einem einzigen Messvorgang erfassen und mithin eine Aussage über den Betriebszustand des Speichers treffen. Ist der aus der Messung ermittelte Ist-Gasvorspannungsdruck nämlich kleiner oder größer gegenüber einem Soll-Gasvorspannungsdruck, ist der Speicher mit einer vorgebbaren Gasmenge auf seiner Gasseite über eine entsprechende Dosiervorrichtung zu befüllen bzw. zu entleeren, um die Betriebssicherheit des Hydrospeichers zu gewährleisten. Da sich bei der bekannten Lösung jedoch das Arbeits- oder Vorratsgas im Hydrospeicher für einen Messvorgang in die angeschlossene Messkammer beim Einströmen zwangsläufig entspannt, kommt es zu Temperaturunterschieden zwischen dem bevorrateten und dem zu messenden Gas, was die Messqualität nachteilig beeinflusst.

Des Weiteren ist durch die DE 42 27 657 A1 eine Ultraschall-Prüfeinrichtung für einen Hydrospeicher in Form eines Kolbenspeichers bekannt, die der Überprüfung einer vorgebbaren Sollposition des innerhalb des Speichergehäuses verfahrbaren Kolbens als dem Trennelement zwischen Gas- und Flüssigkeitsseite des Speichers dient. Der Kolben weist mindestens einen mittels der Prüfeinrichtung detektierbaren Prüfkörper auf, dem eine sichtbare, die Sollposition des Kolbens kennzeichnende Markierung auf der Außenseite des Speichergehäuses zugeordnet ist. Bezogen auf diese Speichergehäuse-Markierung lässt sich eine für den jeweiligen Prüfkörper am Kolben vorgesehene Ultraschall-Prüfeinrichtung auf das Speicher- oder Druckbehältergehäuse aufsetzen, so dass sich mit nur einer einzigen Prüfeinrichtung eine Vielzahl von verschiedenen Speichern einer bestimmten Größenordnung mit derartigen Markierungen überprüfen lassen, was den gerätetechnischen Überprüfungsaufwand in Grenzen hält.

Da die Position des Kolbens innerhalb des Kolbenspeichers gleichgesetzt werden kann mit einer bestimmten vorgebbaren Füllmenge auf der Gasseite des Hydrospeichers lässt sich insoweit mit nur einem Handgerät als Prüfeinrichtung eine Vielzahl von Speichern auf das Einhalten eines vorgebbaren Gasdruck-Sollwerts hin überprüfen, der regelmäßig dem originären Gasvorfülldruck des Speichers bei seiner Auslieferung oder Inbetriebnahme entspricht. Weicht der Gasdruck-Istwert vom Sollwert ab, ist der Istwert insbesondere kleiner als der Sollwert, verschiebt sich der Trennkolben des Kolbenspeichers aufgrund der vermehrt eintretenden Flüssigkeit in Richtung des abnehmenden Gasvorrats dieses Speichers und der Kolben gerät außerhalb der vorbezeichneten Markierung, was die Ultraschall-Prüfeinrichtung erkennt und dergestalt die Möglichkeit eröffnet, den Speicher auf seiner Gasseite wiederum solange nachzufüllen bis der Kolben wieder seine vorgebbare Sollposition gekennzeichnet über die jeweilige Markierung am Speichergehäuse einnimmt, um dergestalt die volle Funktionsfähigkeit des Hydrospeichers wieder herzustellen.

Da die aufgezeigte Prüfeinrichtung von Hand zu bedienen ist und gegebenenfalls eine große Anzahl von Hydrospeichern zu überprüfen ist, führt dies zu einem hohen manuellen Prüfaufwand, was mit entsprechend hohen Kosten einhergeht.

Die US 4 063 605 offenbart eine Vorrichtung zum Bestimmen des Gewichts eines Hydrospeichers während seines Betriebs innerhalb einer hydraulischen Anlage, bei dem eine Flüssigkeit unter Druck in einen mit einem Gas zumindest teilweise gefüllten Druckbehälter eingebracht, dabei das Gas komprimiert und die Flüssigkeit unter Druck derart gespeichert wird, dass bei ihrem Austritt aus dem Speicher hydraulische Energie an die Anlage abgegeben wird und bei dem das jeweils aktuelle Gewicht des Hydrospeichers mittels einer Wägeeinrichtung erfasst wird, die an dem Hydrospeicher angreift, wobei die Wägeeinrichtung eine Aufnahme aufweist, auf die der Hydrospeicher bodenseitig aufsetzbar ist und wobei die Aufnahme mit einer Messeinrichtung für die Gewichtskraftermittlung des Hydrospeichers zusammenwirkt.

Ausgehend von diesem Stand der Technik liegt der Erfindung die Aufgabe zugrunde, eine Vorrichtung nebst Verfahren zu schaffen mit denen sich bei geringem Aufwand und frei von Messfehlern eine Aussage über die Funktionssicherheit eines Hydrospeichers treffen lässt.

Eine dahingehende Aufgabe löst eine Vorrichtung mit den Merkmalen des Patentanspruches 1 in seiner Gesamtheit sowie Verfahren gemäß den Merkmalsausgestaltungen nach den Patentansprüchen 8 und 9.

Nach dem Kennzeichen des Patentanspruches 1 ist mittels der Messeinrichtung das Leergewicht des Hydrospeichers feststellbar.

Ferner wird mittels einer separaten Wägeeinrichtung, die an dem jeweiligen Hydrospeicher angreift, das Gewicht des Hydrospeichers auch während seines Betriebs innerhalb einer hydraulischen Anlage, an die er angeschlossen ist, vorzugsweise fortlaufend erfasst. Die an dem jeweiligen Hydrospeicher vorzugsweise ständig oder permanent angreifende Wägeeinrichtung kann im Ausgangszustand, bei dem der Hydrospeicher nicht mit einer Flüssigkeit, wie beispielsweise einem Hydraulikmedium, teilweise befüllt ist, dessen Leergewicht feststellen. Hat man das Leergewicht des jeweiligen Hydrospeichers einer bestimmten Größenklasse erfasst, weiß man auch aufgrund von Mess- oder Erfahrungswerten, wieviel Flüssigkeit ein solcher Speicher aufnehmen kann, um mit einem vorgebbaren Gasvordruck auf der Gasseite des Hydrospeichers derart vorgespannt zu werden, dass er betriebssicher seiner Funktion nachkommt. Bei der dahingehenden Betrachtung kann man auch durchaus auf Referenz-Hydrospeicher zurückgreifen, deren funktionsgemäßes "Betriebsgewicht" man kennt. Ist der Hydrospeicher nun im Rahmen der hydraulischen Anlage, an die er angeschlossen ist in Betrieb, wird er zumindest langfristig gesehen, auf der Gasseite, beispielsweise durch Permeation oder sonstige Undichtigkeiten auf Seiten des jeweiligen Trennelementes, das die Gasseite von der Flüssigkeitsseite separiert, in Richtung der Flüssigkeitsseite Gas verlieren mit der Folge, dass der Ist-Gasvorspannungsdruck unter den Solldruck sinkt und zwangsläufig dann mehr Flüssigkeit in den Speicher gelangt, was jedoch mit der an den Hydrospeicher angeschlossenen Wägeeinrichtung unmittelbar feststellbar ist. Werden hier vorgebbare, nicht mehr zu tolerierende Masse-Grenzwerte überschritten, ist der jeweilige Hydrospeicher entweder gleich ganz zu tauschen oder auf seiner Gasseite im Rahmen der Wartung nachzufüllen.

Aufgrund der fortlaufend möglichen Gewichtsmessungen des Speichers lassen sich auch tendenzielle Entwicklungen erkennen, die eine Aussage ermöglichen, wann die Funktionssicherheit des Hydrospeichers nicht mehr gewährleistet ist. Im Extremfall könnte das Trennelement des Hydrospeichers regelmäßig in Form einer elastomeren Membran oder einer Speicherblase einreißen, oder der Trennkolben eines Kolbenspeichers umfangsseitig undicht werden, mit der Folge, dass in einem derartigen Versagensfall der Hydrospeicher seine gesamte Gasmenge in Richtung seiner Flüssigkeitsseite verliert, und die Flüssigkeit vollständig im Betrieb des Speichers dann den Druckbehälter oder das Speichergehäuse auszufüllen beginnt, was die Wägeeinrichtung aufgrund des rasch ansteigenden Gewichtes des Speichers, bedingt durch die Schwere der Flüssigkeit, mit Sicherheit unmittelbar erkennt. Insbesondere Hydrospeicher, die im Rahmen von Notfunktionen bei Maschinenanlagen, wie sie auch in Kernkraftwerken vorkommen, eingesetzt sind, lassen sich dergestalt auch über längere Betriebszeiträume mittels der Wägeeinrichtung auf ihre geforderte Funktionssicherheit hin überprüfen. Dies stellt einen hohen Sicherheitsgewinn dar.

Für besonders genaue Messungen lässt sich die Wägeeinrichtung an eine übergeordnete Steuer- und Überwachungselektronik anschließen, in die auch Druck- und/oder Temperaturwerte mit eingehen, so dass sich ausgehend von den üblichen Gas-Zustandsgleichungen die ermittelten Gewichte auf die exakt eingebrachten Flüssigkeits- und Gasmengen im jeweiligen Hydrospeicher rückrechnen lassen. Da der Hydrospeicher ein an sich geschlossenes System darstellt, genügt es regelmäßig die Druck- und/oder Temperaturwerte auf der Flüssigkeitsseite des Speichers abzugreifen, da zumindest im langfristigen Betrieb desselben sich die Druck- und/oder Temperaturwerte auf der Gasseite des Speichers an dessen Flüssigkeitsseite zwangsläufig anpassen.

Die Erfindung betrifft des Weiteren ein Verfahren zum Durchführen einer Gewichtsmessung unter Einsatz der erfindungsgemäßen Vorrichtung, bei einem Hydrospeicher zum Feststellen der jeweils vorhandenen Gasvorratsmenge auf der Gasseite des Druckbehälters, bei dem ausgehend von einem Referenzwert als Sollwert die jeweilige Gasvorratsmenge als Istwert festgestellt wird, wobei sich diese verringert, wenn bei einem vorgebbaren Betriebszustand des Hydrospeichers sich die Flüssigkeitsmenge auf der Flüssigkeitsseite des Druckbehälters ungewollt erhöht.

Mit einem dahingehenden Gewichtsmessverfahren lässt sich auch eine Kolbenpositionsbestimmung bei einem Kolbenspeicher durchführen, um dergestalt über die ermittelte Position des Kolbens indirekt wieder Rückschlüsse auf die Gasvorratsmenge des Hydrospeichers im Betrieb desselben zu erhalten.

Im Folgenden wird die erfindungsgemäße Vorrichtung zum Bestimmen des Gewichts eines Hydrospeichers anhand von Ausführungsbeispielen nach der Zeichnung näher erläutert. Dabei zeigen in prinzipieller und nicht maßstäblicher Darstellung die
- Fig. 1 und 2: eine perspektivische Ansicht auf einen Kolbenspeicher bzw. einen Blasenspeicher nebst jeweils zugehöriger Wägeeinrichtung;
- Fig. 3 und 4: einmal in perspektivischer Ansicht, einmal in einer Seitendarstellung die Wägeeinrichtung, wie sie für einen Blasenspeicher nach der Fig. 2 benutzt ist.

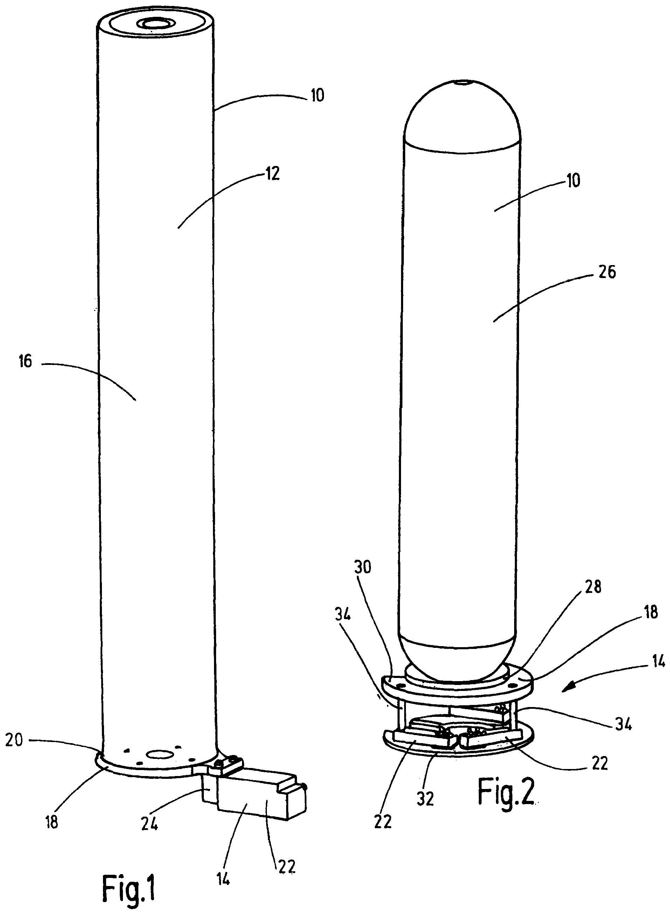

Die Fig. 1 zeigt eine Vorrichtung zum Bestimmen des Gewichts eines Hydrospeichers 10 in Form eines Kolbenspeichers 12, bei dem das jeweils aktuelle Gewicht des Speichers 10, 12 mittels einer Wägeeinrichtung 14 erfasst wird, die an dem Hydrospeicher 10 angreift.

Solche Hydrospeicher werden fachsprachlich auch als Hydraulikspeicher, hydropneumatischer Speicher oder auch als Akkumulator bezeichnet. Grundsätzlich geht es bei solchen Hydrospeichern darum, eine Flüssigkeit, insbesondere in Form eines Hydraulikmediums, unter Druck innerhalb des Speichers abzuspeichern. Beim erneuten Entladen der Flüssigkeit des Speichers unter dem Druck des vorgespannten Gases in einen hydraulischen Kreislauf einer hydraulischen Anlage kann dann die gespeicherte, hydraulische Energie abgegeben werden. Hierfür ist der jeweilige Hydrospeicher 10 über eine in den Figuren 1 und 2 nicht näher dargestellte Verrohrung regelmäßig auf seiner Unterseite an einen Hydraulikkreis oder Hydraulikanlage (nicht dargestellt) angeschlossen. Der Flüssigkeitsdruck im Speicher komprimiert ein in dem Hydrospeicher aufgenommenes Gas, regelmäßig in Form von Stickstoff. Bei der bereits angesprochenen Volumenentnahme dehnt sich das Speichergas dann aus, wobei sich der Druck auf der Gasseite reduziert. Das bevorratete Gas im Hydrospeicher und die Hydraulikflüssigkeit werden meist durch ein Trennglied, vorzugsweise mediendicht, voneinander separiert. Je nach Bauart des Speichers kommen unterschiedliche Trennglieder zum Einsatz. So weist ein Membranspeicher als Trennglied eine Membran auf; ein Blasenspeicher eine Elastomerblase; ein Kolbenspeicher einen Kolben und ein Balgspeicher regelmäßig einen Metallbalg als Trennglied oder Trennelement auf. Mittels des Trenngliedes oder Trennelementes soll die Trennung des Gases von der Flüssigkeit auch über längere Einsatzdauern des jeweiligen Hydrospeichers gewährleistet werden, wobei grundsätzlich ein Entweichen des Gases über das Trennelement auf die Flüssigkeitsseite des Speichers sich nicht vermeiden lässt.

So ist der tatsächliche Gasverlust im Wesentlichen vom verwendeten Elastomer der Trennmembran oder der Speicherblase sowie der eingesetzten Flüssigkeit und der Molekülgröße des Speichergases abhängig. Weitere Einflussgrößen sind durch die Auswahl des Materials und der Dicke des Trennelements vorgegeben, wobei auch Druckunterschiede im Betrieb des Hydrospeichers zwischen Gas- und Flüssigkeitsseite sowie die Lastwechselzahl im Betrieb und die Einsatztemperatur des Hydrospeichers eine durchaus wichtige Rolle spielen. Kolbenspeicher können grundsätzlich über das Dichtsystem des Trennkolbens, der auf der Innenumfangsseite des Speicher- oder Druckgehäuses geführt ist, Gas von der Gasseite des Kolbenspeichers auf dessen Flüssigkeitsseite verlieren. Die angesprochenen Metallbalgspeicher als eine weitere Art von Hydrospeichern sind hingegen praktisch gasdicht und haben keine Permeation, da die regelmäßig hierfür eingesetzten balgartigen Metallmembranen auch bei hohen Temperaturen kein Gas durchlassen; allein im Versagensfall, also bei Durchreißen des Metallbalgs, kommt es gleichermaßen zur Funktionsunfähigkeit des Speichers, was auch im jeweiligen Versagensfall des Trennelementes für den Membran-, Blasen- sowie Kolbenspeicher gilt.

Zur Auslegung des jeweiligen Hydrospeichers wird auf die Formeln der Zustandsänderung von Gasen zurückgegriffen, wobei als Speichergas für die Hydrospeicher regelmäßig Stickstoff eingesetzt wird. Bei der Berechnung und bei der Auslegung der Speicher wird oft mit idealen Gaszustandsänderungen gerechnet, wobei bei sehr hohen Drücken man das diesbezüglich reale Gasverhalten einzubeziehen hat. Ferner kommen iterative Rechnungen zum Einsatz unter Einbezug von gemessenen Werten für Druck-, Temperatur- und Volumenänderung.

Wie bereits dargelegt, ist die Funktionsfähigkeit des jeweiligen Hydrospeichers dann beeinträchtigt, wenn er aufgrund von Verlusten auf seiner Gasseite über zu wenig Vorrats- oder Speichergas verfügt, das unter einem vorgebbaren Druck im Speicher 10 steht. Im dahingehenden Fall nimmt auf der Flüssigkeitsseite des Hydrospeichers 10 die Aufnahme an Flüssigkeit zwangsläufig zu, was sich ohne Weiteres über die Wägeeinrichtung 14 für den Hydrospeicher 10 erfassen lässt.

So kann man beispielsweise mittels der Wägeeinrichtung 14 vor Inbetriebnahme des Hydrospeichers 10 dessen Leergewicht erfassen, und ausgehend von Referenzwerten von bekannten funktionsfähigen Speichern lässt sich dann die ideale Füllmenge innerhalb des Hydrospeichers 10 an Flüssigkeit vorgeben, die gewichtsmäßig von der Wägeeinrichtung 14 erfasst ist und weiter überwacht wird. Man weiß demgemäß sehr genau, wieviel ein Hydrospeicher 10 einer bestimmten Bauart und Baugröße im Betrieb zu wiegen hat, um funktionsfähig zu sein. Nimmt nun ungewollt im Betrieb des Speichers die Gasvorratsmenge auf seiner Gasseite ab, erhöht sich entsprechend zyklusbedingt die Flüssigkeitsmenge auf seiner Flüssigkeitsseite, und die damit verbundene Massen- oder Gewichtszunahme wird von der Wägeeinrichtung 14 erfasst. Bei Überschreiten vorgebbarer Grenzwerte wird dann der jeweilige Hydrospeicher 10 als in der Funktion beeinträchtigt oder als funktionsunfähig erkannt mit der Folge, dass er auf seiner Gasseite mit Gas unter vorgebbaren Druck nachgefüllt wird oder gleich ganz gegen einen neuen Speicher getauscht wird.

Da die Wägeeinrichtung 14 permanent an den Hydrospeicher 10 angeschlossen ist und fortlaufend Messungen vornimmt, lassen sich dergestalt über eine nicht näher dargestellte Auswerte- und Diagnoseeinheit auch Tendenzen feststellen, wie lange noch mit der Funktionssicherheit des Speichers gerechnet werden kann. Kommt es zum Versagen des jeweiligen Trennelementes, hier in Form des Trennkolbens für den Kolbenspeicher 12, wird dies unmittelbar durch die Wägeeinrichtung 14 festgestellt, da dann sehr rasch sich der gesamte Hydrospeicher 10 mit Flüssigkeit füllt, wobei der stark ansteigende Flüssigkeitseintrag von der Wägeeinrichtung 14 nebst angeschlossener Auswerteelektronik als Versagen des Hydrospeichers 10 interpretiert wird, was den Einsatz solcher Wägeeinrichtungen 14 auch für solche Hydrospeicher 10 besonders sinnvoll werden lässt, wenn sie bei Maschinenanlagen, wie sie beispielsweise im Kraftwerksbereich vorkommen, deren Sicherheit im Versagensfall gewährleisten sollen, indem sie deren Funktion auch im Störfall gewährleisten.

Indirekt lässt sich über die Zustandserfassung von Flüssigkeits- und Gasvorrat mittels der Wägeeinrichtung 14 auch eine Aussage über die Kolbenposition innerhalb des Speichergehäuses des Kolbenspeichers 12 treffen, was wiederum Aussagen zulässt über die gewünscht hemmnisfreie Bewegung des Kolbens als Trennelement innerhalb des Speichergehäuses 16.

Die nicht dargestellte Verrohrung der hydraulischen Anlage, an die die Hydrospeicher 10 auf ihrer Flüssigkeitsseite regelmäßig mit ihrer Bodenseite angeschlossen sind, beeinträchtigen die Gewichtsmessung mittels der Wägeeinrichtung 14 nur sehr indirekt, da die dahingehende Verrohrung bauartbedingt grundsätzlich nachgiebig ist, und der dahingehende Gewichtseinfluss kann über die Auswerteelektronik, an die die Wägeeinrichtung 14 angeschlossen ist, entsprechend herausgerechnet werden. Fehlmessungen betreffend die jeweilige Betriebssituation des Hydrospeichers 10 sind somit ausgeschlossen.

Gemäß der Darstellung nach der Fig. 1 weist die Wägeeinrichtung 14 eine kreisringförmige Aufnahme 18 auf, die das Gehäuse 16 des Hydrospeichers 10 an dessen Bodenseite 20 anliegend umfasst, so dass insoweit der Druckbehälter des Hydrospeichers 10 bodenseitig aufsetzbar und durch die Aufnahme 18 gehalten ist. Die Aufnahme 18 trägt also insoweit den Kolbenspeicher 12 in der Art einer Waagschale. Die Aufnahme 18 ist Teil der Wägeeinrichtung 14, und die zugeordnete Messeinrichtung verfügt über eine Wägezelle 22 mit einem Biegebalken 24 und mindestens einem darauf angeordneten Dehnmessstreifen (nicht dargestellt). Dahingehende Wägezellen 22 sind üblich und werden fachsprachlich auch als Plattform-Wägezellen bezeichnet. Diese lassen sich beispielsweise unter der Handelsbezeichnung PW12C... von der deutschen Firma Hottinger Baldwin Messtechnik GmbH beziehen. Die jeweilige Wägezelle 22 kann auch als Doppelbiegebalken aus metallischem Werkstoff, wie Aluminium, mit vorzugsweise rechteckigem Querschnitt konzipiert sein. Ferner kann die insoweit gebildete Messeinrichtung zwecks Visualisierung ihrer Messergebnisse an einen Messwertverstärker der nicht näher dargestellten Auswerteelektronik angeschlossen sein. Ein geeigneter Messverstärker DAD141.1 ist beispielhaft von der Firma Soemer zu erhalten.

Die ringförmige Aufnahme 18 besteht aus einem massiven Metallring und ermöglicht der nicht näher dargestellten Verrohrung, den Ring für einen Anschluss auf der Flüssigkeitsseite des Kolbenspeichers 12 zu durchgreifen.

Ferner ist gemäß der Darstellung nach der Fig. 1 auf der Oberseite der jeweiligen Wägezelle 22 die jeweilige Umfassung in Form der Aufnahme 18 nebst ihren zuordenbaren Komponenten für das Festlegen des Kolbenspeichers 12 in der Aufnahme 18 festgelegt.

Bei der Ausführungsform nach der Fig. 2 findet eine Gewichtsmessung für einen Blasenspeicher 26 üblicher Bauart statt. Für einen Blasenspeicher 26 ist es erstmalig möglich, unter Beiziehen von Referenzwerten für vergleichbare Blasenspeicher vorzugsweise ausgehend von einer Leergewichtsermittlung mittels der Wägeeinrichtung 14 zu einer Aussage über den Befüllungszustand des Speichers auf seiner Gasseite zu gelangen, um dergestalt Aussagen über die Funktionsfähigkeit und die Funktionssicherheit des Blasenspeichers 26 zu erhalten.

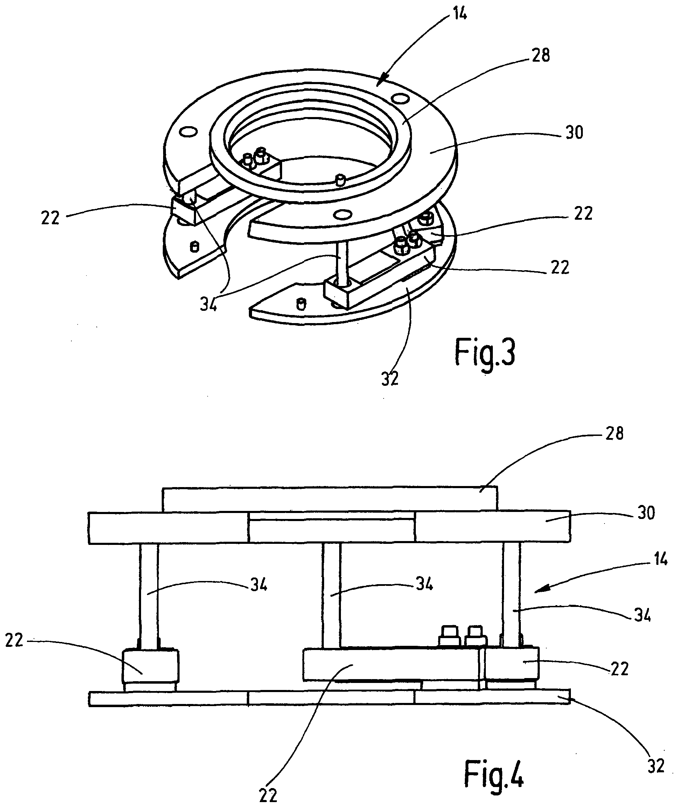

Hierfür ist der Blasenspeicher 26 bodenseitig in einen Aufnahmering 28 als Teil der bereits aufgezeigten Aufnahme 18 eingesetzt. Wie insbesondere die Fig. 3 zeigt, ist der dahingehende Aufnahmering 28 geschlossen ausgebildet und auf der Oberseite auf einen geschlitzten Aufsetzring 30 aufgesetzt, der ebenso Bestandteil des Aufnahmeteils 18 und mithin der Wägeeinrichtung 14 ist. Koaxial zu dem Aufnahmering 28 und dem Aufsetzring 30 erstreckt sich unterhalb dieser beiden Ringe mit einem axialen Abstand ein Anlagering 32, der entsprechend zu dem Aufsetzring 30 geschlitzt ist. Auch der Anlagering 32 gehört zu der Wägeeinrichtung 14 als Ganzes, und mit diesem ist die Wägeeinrichtung 14 auf einem nicht näher dargestellten Boden oder sonstigen Grund zusammen mit dem Blasenspeicher 26 aufständerbar. Auf der oberen Kreisringfläche des Anlageringes 32 sind mit dem Anlagering 32 fest verbunden wiederum drei Wägezellen 22 angeordnet, die auf ihrer Oberseite jeweils eine Messsäule 34 tragen, die mit ihrem oberen freien Ende an der Unterseite des Aufsetzringes 30 angreifen.

Die Wägezelle 22 gemäß der Ausgestaltung nach den Figuren 2 bis 4 ist unter der Produktbezeichnung K2A bei der deutschen Firma Wägetechnik Kohn GmbH zu erhalten. Die dahingehende Wägezelle K2A gehört zu der Baureihe der sogenannten Doppelbiegebalken-Wägezellen, deren Gehäuse aus Aluminium mit rechteckigem Querschnitt besteht. Die angesprochenen Dehnungsmessstreifen sind dabei auf der Ober- und Unterseite angeordnet. Insoweit stehen die Messsäulen 34 in Wirkverbindung mit dem oberen Dehnungsmessstreifen DMS der Wägezelle K2A.

Insofern ist mit den in den Figuren 3 und 4 dargestellten Komponenten insgesamt eine Wägeeinrichtung 14 als Messeinrichtung geschaffen, die es erlaubt, Hydrospeicher 10, wie beispielsweise den in Fig. 2 dargestellten Blasenspeicher 26 vom Gewicht respektive von der Masse her im jeweiligen Befüllungszustand messtechnisch zu erfassen. Dabei haben sich die aufgezeigten Wägezellen 22 als besonders geeignet erwiesen, indirekt über die Gewichtsbestimmung des Hydrospeichers 10 Rückschlüsse auf seinen Gas-Ladungszustand zu erhalten. Dies hat so keine Entsprechung im Stand der Technik.

## Patentansprüche

1. Vorrichtung zum Bestimmen des Gewichts eines Hydrospeichers (10) während seines Betriebs innerhalb einer hydraulischen Anlage, bei dem eine Flüssigkeit unter Druck in einen mit einem Gas zumindest teilweise gefüllten Druckbehälter eingebracht, dabei das Gas komprimiert und die Flüssigkeit unter Druck derart gespeichert wird, dass bei ihrem Austritt aus dem Speicher (10) hydraulische Energie an die Anlage abgegeben wird und bei dem das jeweils aktuelle Gewicht des Hydrospeichers (10) mittels einer Wägeeinrichtung (14) erfasst wird, die an dem Hydrospeicher (10) angreift, wobei die Wägeeinrichtung (14) eine Aufnahme (18) aufweist, auf die der Hydrospeicher (10) bodenseitig aufsetzbar ist und wobei die Aufnahme (18) mit einer Messeinrichtung für die Gewichtskraftermittlung des Hydrospeichers (10) zusammenwirkt, **dadurch gekennzeichnet, dass** mittels der Messeinrichtung das Leergewicht des Hydrospeichers feststellbar ist.

2. Vorrichtung nach Anspruch 1, **dadurch gekennzeichnet, dass** die Messeinrichtung über mindestens eine Wägezelle (22) verfügt mit einem Biegebalken (24) und mindestens einem darauf angeordneten Dehnmessstreifen.

3. Vorrichtung nach einem der vorstehenden Ansprüche, **dadurch gekennzeichnet, dass** die Messeinrichtung zwecks Visualisierung ihrer Messergebnisse an einen Messwertverstärker angeschlossen ist.

4. Vorrichtung nach Anspruch 2 oder 3, **dadurch gekennzeichnet, dass** die Wägezelle (22) als Doppelbiegebalken aus metallischem Werkstoff mit vorzugsweise rechteckigem Querschnitt konzipiert ist.

5. Vorrichtung nach einem der Ansprüche 2 bis 4, **dadurch gekennzeichnet, dass** auf der Oberseite der jeweiligen Wägezelle (22) die Umfassung nebst ihren zuordenbaren Komponenten für die Aufnahme des Hydrospeichers (10) angeordnet ist.

6. Vorrichtung nach einem der Ansprüche 2 bis 5, **dadurch gekennzeichnet, dass** die Aufnahme (18) als Aufnahmering (28) ausgebildet ist, in dessen Öffnung die Bodenseite des Hydrospeichers (10) zumindest teilweise bei gleichzeitiger Auflage eingreift und dass der Aufnahmering (28) sich auf mindestens drei voneinander beabstandeten Messsäulen (34) abstützt, die auf drei jeweils zuordenbaren Wägezellen (22) aufgeständert sind, die bodenseitig sich an einem Anlagering (32) abstützen, der mit den Wägezellen (22) fest verbunden ist.

7. Vorrichtung nach Anspruch 6, **dadurch gekennzeichnet, dass** der jeweilige Aufnahmering (28) derart eine Durchgriffsöffnung umfasst, dass eine flüssigkeitsführende Leitung an den Druckbehälter des Hydrospeichers (10) auf dessen Flüssigkeitsseite anschließbar ist.

8. Verfahren zum Durchführen einer Gewichtsmessung bei einem Hydrospeicher zum Feststellen der jeweils vorhandenen Gasvorratsmenge auf der Gasseite des Hydrospeichers (10) unter Einsatz einer Vorrichtung gemäß einem der Ansprüche 1 bis 7, bei dem ausgehend von einem Referenzwert für die Gasvorratsmenge festgestellt wird, wie sich diese verringert, wenn bei einem vorgebbaren Betriebszustand des Hydrospeichers (10) sich die Flüssigkeitsmenge auf der Flüssigkeitsseite des Hydrospeichers (10) erhöht.

9. Verfahren zum Durchführen einer Kolbenpositionsbestimmung bei einem Kolbenspeicher (12) mittels einer Gewichtsmessung zum Feststellen der jeweils eingenommenen Kolbenposition unter Einsatz einer Vorrichtung gemäß einem der Ansprüche 1 bis 7, wobei ausgehend von einem Referenzwert für eine vorgegebene Kolbenposition festgestellt wird, wie sich diese ändert, wenn bei einem vorgebbaren Betriebszustand des Kolbenspeichers (12) sich die Gasmenge auf der Gasseite verringert und sich die Flüssigkeitsmenge auf der Flüssigkeitsseite des Kolbenspeichers (12) erhöht.

## Claims

1. Device for determining the weight of a hydraulic accumulator (10) while it is operating inside a hydraulic system, wherein a fluid under pressure is admitted to a pressure vessel which is at least partially filled with a gas, during which the gas is compressed and the fluid is stored under pressure such that, when it leaves the accumulator (10), hydraulic energy is released to the system and wherein the respective current weight of the hydraulic accumulator (10) is recorded by means of a weighing apparatus (14), which engages with the hydraulic accumulator (10), wherein the weighing apparatus (14) comprises a receptacle (18) on which the bottom side of the hydraulic accumulator (10) can be placed and wherein the receptacle (18) interacts with a measuring apparatus to establish the weight force of the hydraulic accumulator (10), **characterised in that** the empty weight of the hydraulic accumulator can be ascertained by the measuring apparatus.

2. Device according to claim 1, **characterised in that** the measuring apparatus has at least one load cell (22) with a bending beam (24) and at least one strain gauge arranged thereon.

3. Device according to any of the preceding claims, **characterised in that** the measuring apparatus is connected to a measuring amplifier in order to display its measurement results.

4. Device according to either claim 2 or claim 3, **characterised in that** the load cell (22) is designed as a double bending beam made from metallic material with a preferably rectangular cross-section.

5. Device according to any of claims 2 to 4, **characterised in that** the enclosure together with its associated components for receiving the hydraulic accumulator (10) are arranged on the upper side of the respective load cell (22).

6. Device according to any of claims 2 to 5, **characterised in that** the receptacle (18) is designed as a receiving ring (28), in the opening of which the bottom side of the hydraulic accumulator (10) at least partially engages with simultaneous contact and **in that** the receiving ring (28) is supported on at least three measuring columns (34), spaced apart from one another, which are elevated on three respectively assignable load cells (22), which are supported on their bases on a contact ring (32), which is securely connected to the load cells (22).

7. Device according to claim 6, **characterised in that** the respective receiving ring (28) surrounds a through opening such that a fluid-conveying pipe can be connected to the pressure vessel of the hydraulic accumulator (10) on the fluid side thereof.

8. Method for carrying out a weight measurement in a hydraulic accumulator to ascertain the respective available gas supply quantity on the gas side of the hydraulic accumulator (10) by using a device according to any of claims 1 to 7, which is used to ascertain, based on a reference value for the gas supply quantity, the extent to which said quantity falls when the fluid quantity on the fluid side of the hydraulic accumulator (10) rises in a pre-definable operating state of the hydraulic accumulator (10).

9. Method for carrying out a piston position determination in a piston accumulator (12) by means of a weight measurement to ascertain the piston position assumed in each case using a device according to any of claims 1 to 7, which is used to ascertain, based on a reference value for a predefined piston position, the extent to which said position changes when the gas quantity on the gas side falls and the fluid quantity on the fluid side of the piston accumulator (12) rises in a pre-definable operating state of the piston accumulator (12).

## Revendications

1. Dispositif de détermination du poids d'un accumulateur (10) hydraulique pendant son fonctionnement au sein d'une installation hydraulique, dans lequel on introduit un liquide sous pression dans un récipient tenant la pression et empli au moins en partie d'un gaz, on comprime ensuite le gaz et on accumule le liquide sous pression, de manière à céder, à sa sortie de l'accumulateur (10) hydraulique de l'énergie hydraulique à l'installation, et dans lequel on relève le poids en cours de l'accumulateur (10) hydraulique, au moyen d'un dispositif (14) de pesée, qui intervient sur l'accumulateur (10) hydraulique, dans lequel le dispositif (14) de pesée a un logement (18), sur lequel l'accumulateur (10) hydraulique peut être posé du côté du fond, et dans lequel le logement (18) coopère avec un dispositif de mesure de détermination de la force pondérale de l'accumulateur (10) hydraulique, **caractérisé en ce que** le poids à vide de l'accumulateur hydraulique peut être constaté au moyen du dispositif de mesure.

2. Dispositif suivant la revendication 1, **caractérisé en ce que** le dispositif de mesure dispose d'au moins une cellule (22) de pesée ayant une poutrelle (24) de flexion et au moins une jauge extensométrique.

3. Dispositif suivant l'une des revendications précédentes, **caractérisé en ce que** le dispositif de mesure est, en vue d'une visualisation de ses résultats de mesure, raccordé à un amplificateur de valeur de mesure.

4. Dispositif suivant la revendication 2 ou 3, **caractérisé en ce que** la cellule (22) de pesée est conçue sous la forme d'une poutrelle de flexion double en matériau métallique ayant, de préférence, une section transversale rectangulaire.

5. Dispositif suivant l'une des revendications 2 à 4, **caractérisé en ce que**, sur le côté supérieur de la cellule (22) respective de pesée, est disposée l'enceinte, outre des éléments qui peuvent lui appartenir, de réception de l'accumulateur (10) hydraulique.

6. Dispositif suivant l'une des revendications 2 à 5, **caractérisé en ce que** le logement (18) est constitué sous la forme d'un anneau (28) de logement, dans l'ouverture duquel le côté de fond de l'accumulateur (10) hydraulique peut pénétrer au moins en partie, tout en étant supporté, et **en ce que** l'anneau (28) de réception s'appuie sur au moins trois colonnes (34) de mesure à distance les unes des autres, qui reposent sur trois cellules (22) de pesée, qui peuvent leur être associées respectivement, et qui s'appuient du côté du fond sur un anneau (32) de contact, qui est relié fixement aux cellules (22) de pesée.

7. Dispositif suivant la revendication 6, **caractérisé en ce que** l'anneau (28) respectif de réception comprend une ouverture de passage, de manière à ce qu'un conduit de conduite de liquide puisse être raccordé au récipient tenant la pression de l'accumulateur (10) hydraulique sur son côté de liquide.

8. Procédé pour effectuer une mesure de poids d'un accumulateur hydraulique pour la constatation de la quantité de gaz en réserve présente respectivement du côté du gaz de l'accumulateur (10) hydraulique, en utilisant un dispositif suivant l'une des revendications 1 à 7, dans lequel, à partir d'une valeur de référence de la quantité de gaz en réserve, on constate combien celle-ci diminue, si pour un état de fonctionnement pouvant être donné à l'avance de l'accumulateur (10) hydraulique, la quantité de liquide s'élève du côté du liquide de l'accumulateur (10) hydraulique.

9. Procédé pour effectuer une détermination de la position d'un piston dans un accumulateur (12) à piston, au moyen d'une mesure pondérable de constatation de la position prise par le piston, en utilisant un dispositif suivant l'une des revendications 1 à 7, dans lequel, à partir d'une valeur de référence d'une position donnée à l'avance du piston, on constate combien celle-ci se modifie lorsque, pour un état de fonctionnement pouvant être donné à l'avance de l'accumulateur (12) à piston, la quantité de gaz diminue du côté du gaz et la quantité du liquide s'élève du côté du liquide de l'accumulateur (12) à piston.
